# EUROPEAN PATENT SPECIFICATION

(11) **EP 1 594 023 B1**
(45) Date of publication and mention of the grant of the patent: **26.09.2007**
(21) Application number: 05009601.5
(22) Date of filing: 02.05.2005
(51) Int. Cl.: G05B 19/042

(54) **Method for automatic configuration of a process control system and corresponding process control system**
Verfahren und System zur automatischen Konfiguration eines Prozesssteuerungssystems
Système et procédé de configuration automatique d'un système de commande de processus

(30) Priority: 05.05.2004 US 568203 P
(43) Date of publication of application: 09.11.2005
(73) Proprietor: VEGA Grieshaber KG, 77709 Wolfach (DE)
(72) Inventor: Schaetzle, Ralf, 77716 Fischerbach (DE); Faist, Fridolin, 77709 Wolfach (DE)
(74) Representative: Kopf, Korbinian Paul

(56) References cited:
- EP-A- 0 895 145
- EP-A- 1 401 171
- US-A1- 2002 103 946
- US-B1- 6 263 387

## Description

### TECHNICAL FIELD OF THE INVENTION

The present invention relates to a method for automatic configuration of a process control system and a process control system adapted to carry out the method.

### BACKGROUND OF THE INVENTION

With respect to measurement and control technology, and also with respect to process control systems, frequently sensors have to be connected to a control unit or to an analyzing system. Besides the physical connection of the components involved, usually also it is required to adapt the apparatus configuration of the processing system, i.e. the control unit, to the origin of the input data, i.e. the sensors. The arrangement of process control systems can basically be described as follows: on one hand, there is a field apparatus. This can for example be a sensor like a pressure measuring transducer, a level switch, a flow meter, and so on. Or this can also be an actuator like a valve, a slide valve, and so on.

Typically, the sensor provides measurement values via a bus system to the control unit, whereby respective measurement values have a different relevance according to the measuring method used. Thus, pressure sensors provide for example measurement values which are calibrated in pressure units as bar, Pascal or mmH₂O, whereas distance measuring sensors provide values, being calibrated in m, mm, or ft. Flow rates are usually measured by the systems in 1/s, m³/h, or cftps, and so on.

On the other hand, there are control units, being termed as analyzing systems in the following. The control units typically are connected to a field apparatus via the above mentioned bus system. The task of analyzing systems is based on reading the input measurement values (of the field apparatus), to process them adequately, and then generate output control signals (switching signals, current signals, digital values, and so on) from the derived results.

Configuration of the analyzing system typically results via an input unit (keys and display) on the apparatus side, however, it can also result via a configuration interface by means of a PC.

Where applicable, the processed data can also be transmitted via bus systems through gateways or further process control systems.

To comply with the tasks of the analyzing apparatus, different software blocks are provided. Each software block represents a black box. The black box comprises inputs for receiving input signals, and outputs for providing the processed signals. These software blocks respectively represent an object, classifying associated tasks such that the respective result values can be used as virtually calibrated for arbitrary subsequent blocks.

In this manner, a basis is established to divide a measuring task into individual single tasks. Usually, a subdivision is employed, using the following basic functions (basic components):
- Input blocks or input components, respectively,
   comprising the set of information with respect to a connected field apparatus (address command, type of apparatus, input values).
   The input components receive their measurement values from the bus interface (possibly a communication component), and usually transmit them without any change to function components.
- Function components or function blocks, respectively,
   function components receive their input data, e.g. directly, from input components.
   During the processing of field apparatus input data, it has to be considered that for a further processing of e.g. pressure measurement values, other rules and functions are reasonable than they are for further processing of distance or flow values.
   Usually, the sum of the functions belonging to a measurement task is summarized under the formulation "function block" or "function component".
   Typical functions can be:
      "calibration to the container geometry".
      "linearizing functions",
      "integration time",
      "consideration of the density",
      "leak flow volume suppression",
   or extended measuring tasks as
      "difference measurement",
      "measurement in a pressurized container",
      "continous interface measurement, and
      "averaging".
   Function components provide their resulting values for use in output components.
- Output components or output blocks
   output components receive their input data directly from function components. They serve for controlling and generating, of output signals, respectively (switching signals, current-voltage output or digital information).

To solve a complete measurement task in a control unit, in a most simple case a basic component of each type is required: input component, function component, and output component. The thus generated component structure for solution of a complete measurement task is termed as "measurement loop" in the following.

Within a control, a plurality of measurement loop can be processed. Therefore, if a control is connected to a plurality of field apparatuses via a bus system, then, by adequate configuring of the control unit, a corresponding set of measurement loops can be composed in the control unit from the pool of components. According to prior art, the configuration either results from an operating desk connected to the control or alternatively via a configuration computer via a bus connection. By this procedure, it is necessary for a user operating the system, to not only take account of the installation of the apparatus and its wiring, but rather to also carry out complicated configurations at the apparatus.

It would be desirable to reduce the operating complexity when starting these systems. Thus, it would be meaningful to improve the control units of such systems. The installation would be much easier, if the standard configuration profiles are set up automatically depending on the connected sensor.

Therefore, the control should be able to identify a sensor connected to its output and marching to a certain sensor profile, and then automatically set up the corresponding measurement loop profile. An immediately functioning measurement can be thus provided. Moreover, this process should be applicable via different bus systems (as HART, Profibus, Fieldbus Foundation, and so on), containing the necessary information for the sensors in form of parameters via the respective bus per definition.

US 2002\0103946 A1 relates to waste and slave devices. The master device is able to address a slave device attached to abus with messages using a plurality of different protocols.

EP 0 895 145 A1 relates to a method and apparatus providing a standard interface to process control devices which are adapted to differing field - bus protocols.

It would be desirable that a plurality of sensor profiles can be identified automatically. A preferably exact profile should be determined for digitally communicating systems.

### SUMMARY OF THE INVENTION

Implementations of the invention can include one or more of the following features. According to an aspect of the invention, a method for automatic configuration of process control system is provided, comprising a master and at least one slave; whereby the master controls the at least one slave, which is connected to and communicates with the master via a bus system, and processes data received from the at least one slave, whereby the master automatically identifies the at least one slave via the bus system, and subsequently automatically generates an apparatus configuration for setting up the slave according to its identification such that the slave is ready to be operated in the process control system.

In another aspect of the invention, the master is an analyzing apparatus, in particular a control unit, comprising allocation tables, from which the master selects the adequate apparatus configuration for the slave identified.

According to a further aspect of the invention, the slave is a field apparatus, in particular a sensor or an actuator. The identification of the connected slave is carried out by means of the functionality of the master. Upon starting the process control system, communication towards the bus system is initiated by the master.

Yet another aspect of the invention is that for identifying the field apparatus, the master retrieves information concerning manufacturer, type, apparatus TAG by means of standardized commands. The master compares the identification data of the slave to apparatus profiles, contained in the allocation tables, to find the adequate apparatus profile to set up the slave for operation in the process control system.

Moreover, the master generates a measurement loop comprising an input component, an output component, and a function component for the apparatus configuration. The allocation table can also be supplemented by reloadable adapted apparatus profiles.

In a further aspect of the invention, the automatically generated measurement loops are corrected interactively. During the correction of the measurement loops, the automatic generation of measurement loops is deactivated until new slaves are connected to the master or until the automatic measurement loop generation is reactivated.

According to yet another aspect, the automatic adaptation of already present measurement loops is carried out when an already connected slave is replaced by another type of slave.

According to an aspect of the present invention, a method for automatic configuration of a process control system is provided, comprising at least one field apparatus, which is connected via a bus system to an analyzing apparatus, whereby upon starting the analyzing apparatus, the latter verifies the presence of the field apparatus at the bus system at a certain bus address, and, upon response of the bus system, for identification of the field apparatus, requests information concerning manufacturer, type, and apparatus TAG of the field apparatus via the bus system, and subsequent to the identification, the analyzing system compares data retrieved during the identification process to field apparatus profiles stored in allocation tables of the analyzing apparatus, and, upon an coincidence, generates an apparatus configuration in form of a measurement loop, comprising an input component, a function component, and an output component, by means of which the field apparatus is ready for operation.

A further aspect of the present invention is a process control system, comprising a master and at least one slave, whereby the master is adapted to control the slave and to process data received from the slave, and the slave is adapted to be connected to and to communicate with the master via a bus system, whereby the master is adapted to automatically identify the slave via the bus system, and to subsequently generate an apparatus configuration for setting up the slave according to its identification such that the slave is ready to be operated in the process control system.

In the process control system, the master is an analyzing apparatus and the slave is a field apparatus according to an aspect of the invention. According to another aspect, the master is a control unit and the slave is a sensor or an actuator.

According to still another aspect, the master comprises allocation tables, which contain a number of predefined apparatus configurations suitable for a number of the field apparatuses. The allocation tables are supplementable via an input device.

Moreover, the bus system is a HART-bus system according to a further aspect of the invention. The bus system comprises commands for the master for requesting the presence of a slave at the bus system.

According to yet another aspect of the present invention, the allocation tables are supplementable by reloadable adapted apparatus profiles.

It is another aspect of the invention that the master is adapted to generate a measurement loop for a specific identified slave. The measurement loop comprises at least one input component, at least one output component, and at least one function component.

Further, the allocation tables comprise fixed measurement loop profiles for each apparatus profile.

### BRIEF DESCRIPTION OF THE DRAWINGS

For further explanation and better understanding, several exemplary embodiments of the present invention will be described below in more detail with reference to the attached drawings, of which:
- Fig. 1: is a schematic diagram of an arrangement of a process control system.
- Fig. 2: is a schematic diagram of another arrangement of a process control system.
- Fig. 3: is a schematic diagram, showing a measurement loop block.
- Fig. 4: is another schematic diagram, showing an arrangement of several measurement loop blocks.
- Fig. 5: is a schematic diagram of a process control system according to the invention.
- Fig. 6: is a further schematic diagram of the process control system according to the invention.
- Fig. 7: is a flow chart of the inventive method.
- Fig. 8: is a screenshot of a window for allocation of an input to a measurement loop.
- Fig. 9: is a screenshot of a window for the basic setting for a measurement loop.
- Fig. 10: is a screenshot of a window for allocation of percentage values to sensor input data.
- Fig. 11: is a screenshot of a window for settings for a relais.

### DESCRIPTION OF EXEMPLARY EMBODIMENTS OF THE INVENTION

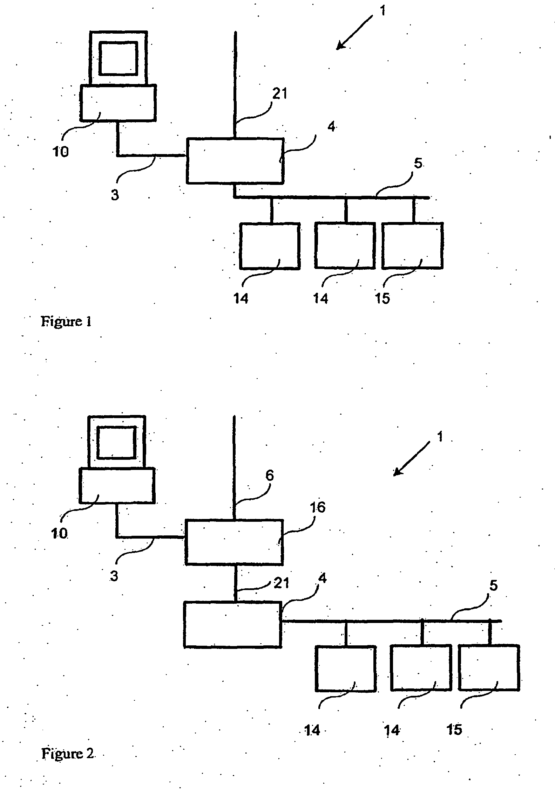

Fig. 1 is a schematic diagram of a process control system. A control unit 4 is connected via a bus system 5 to two sensors 14 and an actuator 15. Further, a PC 10 is connected to the control unit 4 via a configuration interface 3. The configuration of the process control system 1 results by means of an operating desk (e.g. a keyboard and a display). Fig. 2 is another schematic diagram of a further arrangement of a process control system. Here, a gateway 16 is connected between the control unit 4 and the PC 10. Thus, if need be, the processed data can be transferred to gateways 16 or to other process control systems.

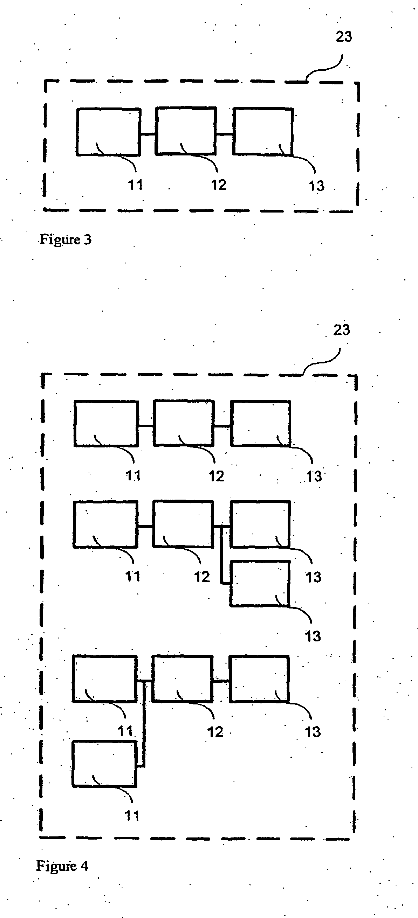

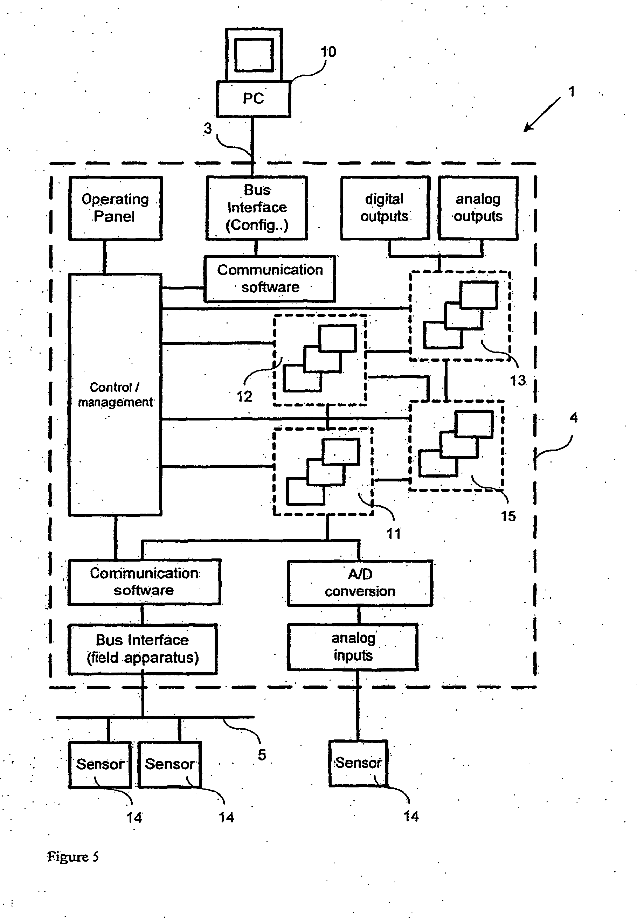

Fig. 3 shows a measurement loop 23, comprising an input component or input block 11, a function component or function block 12, and an output component or output block 13. As already mentioned, the function component 12 receives data directly form input component 11, and output component 13 in turn receives data from function component 12. This arrangement shows the most simple case to solve a complete measuring task in a control unit. Fig. 4 shows a control unit comprising several measurement loops. In case, the control unit 4 is connected to a plurality of field apparatuses 14 via the bus system 5, by adequate configuring of the control unit 4, a set of measurement loops 23 can be composed from a pool of components.

In Fig. 5, a system is shown, comprising a plurality of sensors 14, connected via a bus system 5 to the control unit 4. The control unit in turn is connected to a PC 10. Moreover, the control unit 4 comprises a number of input components 11, function components 12, output components 13, and message components 15. All components, in the delivery state, are unconfigured, that means without any relation with respect to each other.

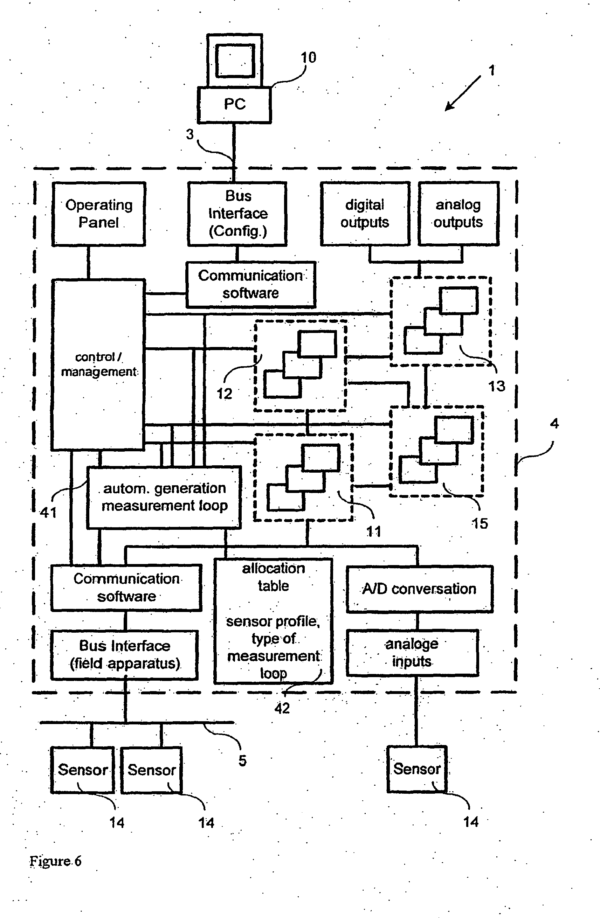

According to Fig. 6, a process control system according to the invention is shown. The process control system comprises the control unit 4 as master of the system and a couple of sensors as slaves of the system, connected thereto over a bus system 5,

Moreover, a PC 10 is connected to the control unit 4. The components, namely input components 11, function components 12, and output components 13 for establishing a measurement loop 23 are still in the unconfigured state. For automatic configuration, and thus automatic generation of a measurement loop 23, the control unit 4 comprises the allocation tables 42, comprising sensor profiles and type of measurement loop fitting thereto.

With respect to the sensors connected to the control unit 4, in case HART sensors are used having certain characteristics, these can be verified at HART input terminals; otherwise used PA sensors can e.g. be verified at Profibus inputs and so on.

In case of HART sensors, instead of smart sensors, pure 4 - 20 mA sensors can also be identified. This assumption is made, if the connection of a sensor is detected (by means of current consumption within certain limits), but, however, no reaction to the digital signal results.

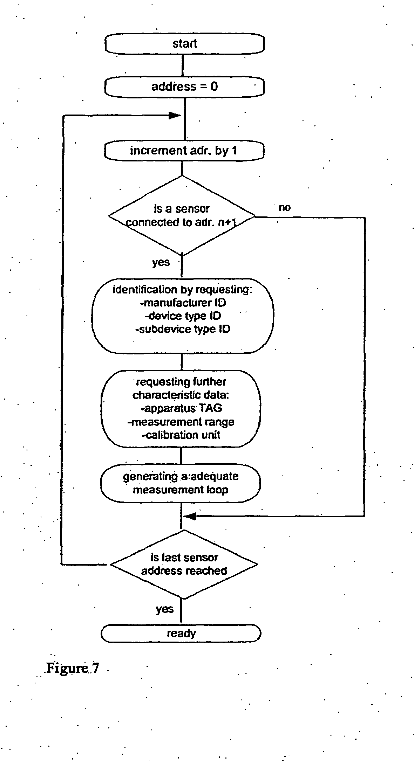

The identification of the connected sensor is carried out by means of the functionality 41, the data flow of which is shown in Fig. 7 in principle.

Upon starting the process control system, the automatic measurement loop operation is started. That means that the control unit 4 automatically takes up communication towards the bus system 5.

The control unit requests - as master of the system - by means of "trial and error" - to a certain bus address, whether a slave 14, 15 is connected to the bus system 5 or not. For this procedure, the already mentioned bus systems provide special commands (e.g. according to HART, Universal Commands are used).

In case the analyzing apparatus receives a response after such a trial, then information with respect to manufacturer and type of apparatus is selectively inquired. This information can also be requested by means of standardized commands with respect to the already mentioned bus systems (excerpt of the definitions, see tables 1 - 3).

**Table 1: Examples for manufacturer IDs**

| Identifier | Value | Meaning |
|---|---|---|
| | | |
| Manufacturer ID | 98 | Manufacturer: VEGA |
| Manufacturer ID | 42 | Manufacturer: Siemens |
| Manufacturer ID | 17 | Manufacturer: E+H |

**Table 2: Device Type Codes HART-Sensors Series 60**

| Type | Apparatus designation | Device type code (HART) |
|---|---|---|
| | | |
| PULS | VEGAPULS | 232/0xE8 |
| FLEX | VEGAFLEX | 231/0xE7 |
| SON | VEGASON | 230/0xE6 |
| SWING. | VEGASWING | 229/0xE5 |
| VIB | VEGAVIB | 228/0xE4 |
| CAP | VEGACAP | 227/0xE3 |
| BAR | VEGABAR | 226/0xE2 |
| DIF | VEGADIF | 225/0xE1 |

**Table 3: Device Type Codes Profibus-Sensors Series 60**

| | | Apparatus ID | |
|---|---|---|---|
| | | VEGA | Profile 3 |
| SON | VEGASON | 0x0770 | 0x9701 |
| FLEX | VEGAFLEX | 0x0771 | 0x9700 |
| PULS | VEGAPULS | 0x0772 | 0x9700 |
| CAP | VEGACAP | 0x076E | 0x9700 |
| BAR | VEGABAR | 0x076F | 0x9701 |
| | | | |

Further, the slaves provide information over fixedly defined commands for the stored apparatus TAG. According to information received concerning the type of apparatus, an advanced analysis for the sensor connected thereto can be carried out. Thus, for example it can be determined, in which measurement range and according to which physical measurement category the sensor is operated.

If the control unit, i.e. the analyzing apparatus, has identified a type of apparatus (sensor, actuator), then it carries out a comparison of the input data with sensor profiles fixedly stored in the control unit 4 in allocation tables 42. When a matching sensor profile is found, then the control automatically generates adequate measurement loop configurations. It also generates a complete measurement loop 23 according to Fig. 5, consisting of an appropriate input component 11, a function component 12, and an output component 13.

**Table 4: Excerpt of the allocation instruction for input components**

| | Input component initialization | |
|---|---|---|
| Sensor profile | Input value | HART address |
| | | |
| Son | Distance | Appropriate for slave |
| Puls | Distance | Appropriate for slave |
| Flex | Distance | Appropriate for slave |
| Bar | Pressure | Appropriate for slave |
| HART Generic | PV | Appropriate for slave |
| 4 - 20 mA | Current | - |

**Table 5: Excerpt of the allocation instruction for function components**

| | Function component initialization | | |
|---|---|---|---|
| Sensor profile | measurement loop tag | Application | Calibration unit |
| | | | |
| Son | Device TAG | Level | m |
| Puls | Device TAG | Level | m |
| Flex | Device TAG | Level | m |
| Bar | Device TAG | Level | bar |

An example by means of a bus system "HART" is:

| | |
|---|---|
| Slave to address = 2 | |
| Manufacturer ID = 98 | VEGA Grieshaber KG |
| Device Type Code = 232 | VEGAPULS |

The control unit 4 receives a response under HART address 2 from a slave 14 (see Fig. 7).
The further communication procedures provide data from the example shown above.

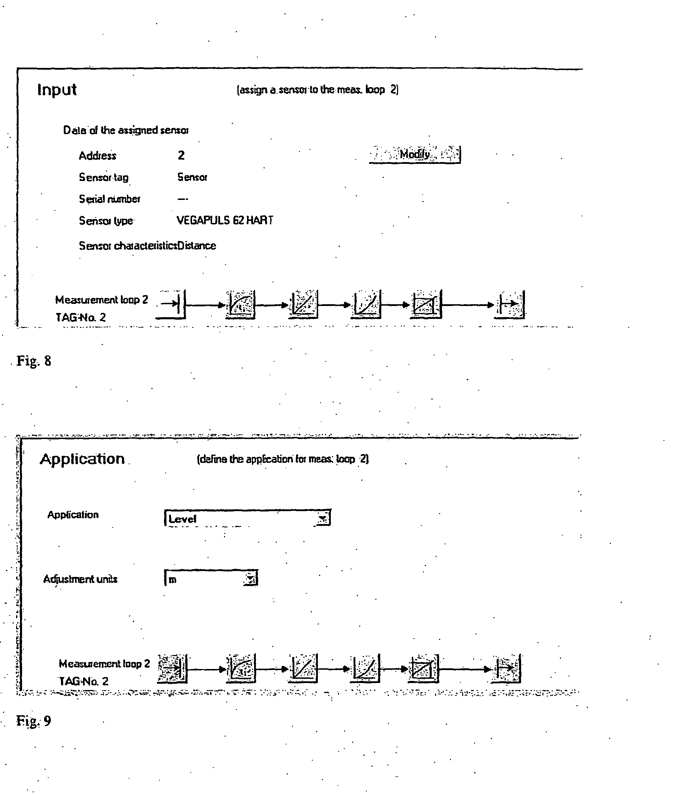

In Fig. 8 it can be seen that the analyzing apparatus generates an input component for distance measurement and generates the measuring principle RADAR for HART address 2.

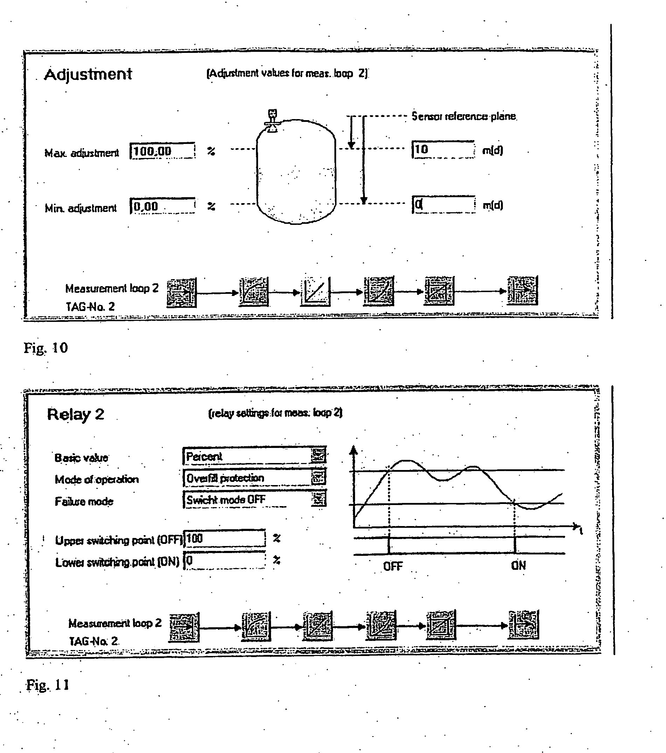

Also adequate for the identified sensor profile, the control unit generates a function component for level measurement comprising the calibration unit "meter" (see Fig. 9).
According to a known measurement range, the latter is automatically entered into the function component as calibration range (see Fig. 10).

Because the output components are independent of the input component and the selected measuring value processing block (function component), the control unit selects for this purpose the output component type most frequently required, namely a switching output, configured for the switching function "overfill protection" (Fig. 11).

When starting the process control system, the user receives - without any further assistance - an adequate measurement loop for the sensor connected, comprising an input component, a function component, and an output component, rendering the system ready to be operated.

Besides the fixedly predetermined sensor profiles / measurement loop type, the allocation table 42 can also be adapted to be supplementable by reloadable profiles. According to this, the allocation table contains two types of data set entries:
a) Fixed measurement loop profiles for each sensor profile are stored in the control unit, which are activated accordingly.
b) The user himself has stored a set of adapted profiles, which are activated accordingly.

Moreover, automatically generated measurement loop profiles can be interactively corrected by the user. In case interactive correction has been carried out, then the automatic generation of measurement units 23 is deactivated until either new slaves (having different identification characteristics) are connected to the control unit / analyzing apparatus, or the control unit is reactivated by means of a function defined for this purpose (for example a reset key or a function initiated by software) for carrying out the automatic measurement loop generation.

In case, the already existing measurement loop sensors are replaced by other sensor types, also the automatic adaptation of already present measurement loop can be carried out. Should the actual measuring task be maintained in this case, it is adequate to request for the desired procedure via a dialogue:
a) generating a completely new measurement loop (according to the above mentioned method)
b) adapting the input component to the new slave.

The invention can be applied to simple one-channel analyzing systems as well as to complex systems.

## Claims

1. A method for automatic configuration of a process control system (1) comprising a master and at least one slave,
whereby the master controls the at least one slave, which is connected to and communicates with the master via a bus system (5), and processes data received from the at least one slave,
whereby the master automatically identifies the at least one slave via the bus system (5), and subsequently automatically generates an apparatus configuration for setting up the slave according to its identification such that the slave is ready to be operated in the process control system (1);
whereby the automatically generated apparatus configuration has the form of a measurement loop (23) comprising an input component (11), an output component (13), and a function component (12);
wherein the function component is at least one function selected from the groups consisting of
a calibration to the container geometry,
linearizing functions,
integration times,
consideration of the density,
leak flow volume suppression,
difference measurement,
measurement in a pressurized container,
continous interface measurement, and
averaging.

2. The method according to claim 1, whereby the master is an analyzing apparatus, in particular a control unit (4), comprising allocation tables, from which it selects the adequate apparatus configuration for the slave identified.

3. The method according to claim 1 or 2, whereby the slave is a field apparatus, in particular a sensor (14) or an actuator (15).

4. The method according to any of claims 1 to 3, whereby the identification of the connected slave is carried out by means of a functionality (41) of the master.

5. The method according to any of claims 1 to 4, whereby upon starting the process control system (1), communication towards the bus system (5) is initiated by the master.

6. The method according to any of claims 1 to 5, whereby for identifying the at least one slave, the master retrieves information concerning manufacturer, type, apparatus TAG by means of standardized commands.

7. The method according to any of claims 1 to 6, whereby the master compares identification data of the slave to apparatus profiles, contained in allocation tables, to find an adequate apparatus profile to set up the slave for operation in the process control system (1).

8. The method according to any of claims 1 to 7, whereby the allocation table is supplemented by reloadable adapted apparatus profiles.

9. The method according to any of claims 1 to 8, whereby automatically generated measurement loop (23) are corrected interactively.

10. The method according to any of claims 1 to 9, whereby during interactive correction of the measurement loop (23), the automatic generation of measurement loop (23) is deactivated until new slaves are connected to the master or until the automatic measurement loop generation is reactivated.

11. The method according to any of claims 1 to 10, whereby the automatic adaptation of already present measurement loop (23) is carried out when an already connected slave is replaced by another type of slave.

12. The method according to any of claims 1 to 11,
wherein the at least one slave is a field apparatus;
wherein the master is an analyzing apparatus;
whereby
upon starting the analyzing apparatus, the latter verifies the presence of the field apparatus at the bus system (5) at a certain bus address, and
upon response of the bus system (5), for identification of the field apparatus, requests information concerning manufacturer, type, and apparatus TAG of the field apparatus via the bus system (5), and
subsequent to the identification, the analyzing system compares data retrieved during the identification process to field apparatus profiles stored in allocation tables of the analyzing apparatus, and
upon an coincidence, generates an apparatus configuration in form of a measurement loop (23), comprising an input component (11), a function component (12), and an output component (13), by means of which the field apparatus is ready for operation.

13. A process control system (1) comprising
a master, and
at least one slave,
whereby the master is adapted to control the slave and to process data received from the slave,
whereby the slave is adapted to be connected to and to communicate with the master via a bus system (5),
whereby the master is adapted to automatically identify the slave via the bus system (5), and to subsequently, automatically generate an apparatus configuration for setting up the slave according to its identification such that the slave is ready to be operated in the process control system (1);
whereby the automatically generated apparatus configuration has the form of a measurement loop (23) for a specific identified slave;
whereby the measurement loop (23) comprises at least one input component (11), at
least one output component (13), and at least one function component (12); wherein the function component is at least one function selected from the group consisting of
a calibration to the container geometry,
linearizing functions,
integration times,
consideration of the density,
leak flow volume suppression,
difference measurement,
measurement in a pressurized container,
continous interface measurement, and
averaging.

14. The process control system (1) according to claim 13, whereby the master is an analyzing apparatus and the slave is a field apparatus.

15. The process control system (1) according to claim 13 or 14, whereby the master is a control unit (4) and the slave is a sensor (14) or an actuator (15).

16. The process control system (1) according to any of claims 13 to 15, whereby the master comprises allocation tables, which contain a number of predefined apparatus configurations suitable for a number of the field apparatuses.

17. The process control system (1) according to claim 16, whereby allocation tables are supplementable via an input device (10).

18. The process control system (1) according to any of claims 13 to 17, whereby the bus system (5) is a HART-bus system.

19. The process control system (1) according to any of claims 13 to 18, whereby the bus system (5) comprises commands for the master for requesting the presence of a slave at the bus system (5).

20. The process control system (1) according to any of claims 16 to 19, whereby the allocation tables are supplementable by reloadable adapted apparatus profiles.

21. The process control system (1) according to any of claims 16 to 20, whereby the allocation tables comprise fixed measurement loop profiles for each apparatus profile.

## Patentansprüche

1. Ein Verfahren zur automatischen Konfiguration eines Prozesssteuerungssystems (1), das Prozesssteuerungssystem umfassend einen Master und zumindest einen Slave,
wobei der Master den zumindest einen Slave steuert, welcher mit dem Master verbunden ist und mit dem Master über ein Bus-System (5) kommuniziert und wobei der Master Daten verarbeitet, empfangen von dem zumindest einen Slave,
wobei der Master den zumindest einen Slave über das Bussystem (5) automatisch identifiziert, und danach automatisch eine Vorrichtungskonfiguration zum Einrichten des Slaves gemäß seiner Identifizierung derart generiert, dass der Slave bereit ist, in dem Prozesssteuerungssystem (1) betrieben zu werden;
wobei die automatisch generierte Vorrichtungskonfiguration die Form einer Messschleife (23) hat, welche eine Eingangskomponente (11), eine Ausgangskomponente (13) und eine Funktionskomponente (12) umfasst;
wobei die Funktionskomponente zumindest eine Funktion ist, die aus der Gruppe, bestehend aus
einer Kalibrierung an die Behältergeometrie,
Linearisierungsfunktionen,
Integrationszeit,
Betrachtung der Dichte,
Leckflussvolumen-Unterdrückung,
Differenzmessung,
Messung in einem Druckbehälter,
kontinuierliche Grenzflächenmessung und
Mittelung ausgewählt ist.

2. Das Verfahren nach Anspruch 1, wobei der Master eine Analysevorrichtung ist, insbesondere eine Steuereinheit (4), welche Zuordnungstabellen umfasst, aus welchen sie die geeignete Vorrichtungskonfiguration für den identifizierten Slave auswählt.

3. Das Verfahren nach Anspruch 1 oder 2, wobei der Slave eine Feldvorrichtung ist, insbesondere ein Sensor (14) oder ein Aktor (15).

4. Das Verfahren nach einem der Ansprüche 1 bis 3, wobei die Identifizierung des verbundenen Slaves mittels einer Funktionalität (41) des Masters durchgeführt wird.

5. Das Verfahren nach einem der Ansprüche 1 bis 4, wobei auf das Starten des Prozesssteuerungssystems (1) die Kommunikation in Richtung des Bussystems (5) durch den Master begonnen wird.

6. Das Verfahren nach einem der Ansprüche 1 bis 5, wobei der Master zum Identifizieren des zumindest einen Slaves mittels standardisierter Kommandos Information betreffend Hersteller, Typ, Vorrichtungs-TAG abruft.

7. Das Verfahren nach einem der Ansprüche 1 bis 6, wobei der Master Identifizierungsdaten des Slaves mit Vorrichtungsprofilen vergleicht, welche in Zuordnungstabellen enthalten sind, um ein geeignetes Vorrichtungsprofil zu finden, um den Slave für den Betrieb in dem Prozesssteuerungssystem (1) einzurichten.

8. Das Verfahren nach einem der Ansprüche 1 bis 7, wobei die Zuordnungstabelle mit nachladbaren angepassten Vorrichtungsprofilen ergänzt wird.

9. Das Verfahren nach einem der Ansprüche 1 bis 8, wobei automatisch erzeugte Messschleife (23) interaktiv korrigiert wird.

10. Das Verfahren nach einem der Ansprüche 1 bis 9, wobei während interaktiver Korrektur der Messschleife (23) die automatische Generierung der Messschleife (23) deaktiviert wird, bis neue Slaves mit dem Master verbunden werden, oder bis die automatische Generierung der Messschleife reaktiviert wird.

11. Das Verfahren nach einem der Ansprüche 1 bis 10, wobei die automatische Anpassung von bereits vorhandener Messschleife (23) durchgeführt wird, wenn ein bereits verbundener Slave durch einen anderen Typ von Slave ersetzt wird.

12. Das Verfahren nach einem der Ansprüche 1 bis 11,
wobei der zumindest eine Slave eine Feldvorrichtung ist;
wobei der Master eine Analysevorrichtung ist;
wobei auf das Starten der Analysevorrichtung, die letztere das Vorhandensein der Feldvorrichtung an dem Bussystem (5) auf einer bestimmten Busadresse überprüft, und auf Antwort des Bussystems (5) zur Identifizierung der Feld-Vorrichtung Information betreffend Hersteller, Typ und Vorrichtungs-TAG der Feld-Vorrichtung über das Bussystem (5) abfragt, und
auf die Identifizierung folgend das Analysesystem Daten, abgerufen während des Identifizierungsprozesses, mit Feldvorrichtungs-Profilen vergleicht, welche in Zuordnungstabellen der Analysevorrichtung gespeichert sind, und
auf eine Übereinstimmung eine Vorrichtungskonfiguration in Form einer Messschleife (23) generiert, welche eine Eingangskomponente (11), eine Funktionskomponente (12) und eine Ausgangskomponente (13) umfasst, mittels welcher die Feld-Vorrichtung für den Betrieb bereit ist.

13. Ein Prozesssteuerungssystem (1), umfassend
einen Master und
zumindest einen Slave,
wobei der Master angepasst ist, den Slave zu steuern und von dem Slave empfangene Daten zu verarbeiten,
wobei der Slave angepasst ist, mit dem Master verbunden zu sein und mit dem Master über ein Bussystem (5) zu kommunizieren,
wobei der Master angepasst ist, den Slave über das Bussystem (5) automatisch zu identifizieren, und danach automatisch eine Vorrichtungskonfiguration zum Einrichten des Slaves gemäß seiner Identifizierung derart zu generieren, dass der Slave bereit ist, in dem Prozesssteuerungssystem (1) betrieben zu werden;
wobei die automatisch generierte Vorrichtungskonfiguration die Form einer Messschleife (23) für einen speziell identifizierten Slave hat;
wobei die Messschleife (23) zumindest eine Eingangskomponente (11), zumindest eine Ausgangskomponente (13), und zumindest eine Funktionskomponente (12) umfasst;
wobei die Funktionskomponente zumindest eine Funktion ist, die aus der Gruppe, bestehend aus
einer Kalibrierung an die Behältergeometrie,
Linearisierungsfunktionen,
Integrationszeit,
Betrachtung der Dichte,
Leckflussvolumen-Unterdrückung,
Differenzmessung,
Messung in einem Druckbehälter,
kontinuierliche Grenzflächenmessung und
Mittelung ausgewählt ist.

14. Das Prozesssteuerungssystem (1) nach Anspruch 13, wobei der Master eine Analysevorrichtung ist und der Slave eine Feldvorrichtung ist.

15. Das Prozesssteuerungssystem (1) nach Anspruch 13 oder 14, wobei der Master eine Steuereinheit (4) ist und der Slave ein Sensor (14) oder ein Aktor (15) ist.

16. Das Prozesssteuerungssystem (1) nach einem der Ansprüche 13 bis 15, wobei der Master Zuordnungstabellen umfasst, welche eine Anzahl von vordefinierten Vorrichtungskonfigurationen umfassen, die für eine Anzahl der Feld-Vorrichtungen geeignet sind.

17. Das Prozesssteuerungssystem (1) nach Anspruch 16, wobei Zuordnungstabellen über eine Eingabevorrichtung (10) ergänzbar sind.

18. Das Prozesssteuerungssystem (1) nach einem der Ansprüche 13 bis 17, wobei das Bussystem (5) ein HART-Bussystem ist.

19. Das Prozesssteuerungssystem (1) nach einem der Ansprüche 13 bis 18, wobei das Bussystem (5) Kommandos für den Master umfasst, um das Vorhandensein eines Slaves an dem Bussystem (5) abzufragen.

20. Das Prozesssteuerungssystem (1) nach einem der Ansprüche 16 bis 19, wobei die Zuordnungstabellen durch nachladbare angepasste Vorrichtungsprofile ergänzbar sind.

21. Das Prozesssteuerungssystem (1) nach einem der Ansprüche 16 bis 20, wobei die Zuordnungstabellen für jedes Vorrichtungsprofil feste Messschleifenprofile umfassen.

## Revendications

1. Procédé pour une configuration automatique d'un système de commande de processus (1) comportant un maître et au moins un esclave,
dans lequel le maître commande le au moins un esclave, lequel est connecté au maître et communique avec celui-ci via un système de bus (5), et traite des données reçues en provenance du au moins un esclave,
dans lequel le maître identifie automatiquement le au moins un esclave via le système de bus (5), et génère ensuite automatiquement une configuration de dispositif pour configurer l'esclave conformément à son identification de sorte que l'esclave est prêt à fonctionner dans le système de commande de processus (1),
dans lequel la configuration de dispositif générée automatiquement a la forme d'une boucle de mesure (23) comportant une composante d'entrée (11), une composante de sortie (13), et une composante de fonction (12), dans lequel la composante de fonction est au moins une fonction sélectionnée parmi le groupe constitué des fonctions suivantes :
un étalonnage concernant la géométrie de conteneur,
des fonctions de linéarisation,
un temps d'intégration,
une considération de la densité,
une suppression du volume de flux de fuite,
une mesure de différence,
une mesure dans un conteneur pressurisé,
une mesure d'interface continue, et
une mise en moyenne.

2. Procédé selon la revendication 1, dans lequel le maître est un dispositif d'analyse, en particulier une unité de commande (4), comportant des tables d'allocation, à partir desquels il sélectionne la configuration de dispositif adéquate pour l'esclave identifié.

3. Procédé selon la revendication 1 ou 2, dans lequel l'esclave est un dispositif de terrain, en particulier un détecteur (14) ou un actionneur (15).

4. Procédé selon l'une quelconque des revendications 1 à 3, dans lequel l'identification de l'esclave connecté est effectuée par l'intermédiaire d'une fonctionnalité (41) du maître.

5. Procédé selon l'une quelconque des revendications 1 à 4, dans lequel au démarrage du système de commande de processus (1), une communication vers le système de bus (5) est initiée par le maître.

6. Procédé selon l'une quelconque des revendications 1 à 5, dans lequel pour identifier le au moins un esclave, le maître récupère des informations concernant le fabricant, le type, la balise du dispositif par l'intermédiaire d'instructions standardisées.

7. Procédé selon l'une quelconque des revendications 1 à 6, dans lequel le maître compare des données d'identification de l'esclave à des profils de dispositif, contenues dans des tables d'allocation, pour trouver un profil de dispositif adéquat afin de configurer l'esclave en vue d'un fonctionnement dans le système de commande de processus (1).

8. Procédé selon l'une quelconque des revendications 1 à 7, dans lequel la table d'allocation est complétée par des profils de dispositif adaptés rechargeables.

9. Procédé selon l'une quelconque des revendications 1 à 8, dans lequel une boucle de mesure générée automatiquement (23) est corrigée de manière interactive.

10. Procédé selon l'une quelconque des revendications 1 à 9, dans lequel pendant une correction interactive de la boucle de mesure (23), la génération automatique de la boucle de mesure (23) est désactivée jusqu'à ce que de nouveaux esclaves soient connectés au maître ou jusqu'à ce que la génération de boucle de mesure automatique soit réactivée.

11. Procédé selon l'une quelconque des revendications 1 à 10, dans lequel l'adaptation automatique de la boucle de mesure déjà présente (23) est effectuée lorsqu'un esclave déjà connecté est remplacé par un autre type d'esclave.

12. Procédé selon l'une quelconque des revendications 1 à 11,
dans lequel le au moins un esclave est un dispositif de terrain,
dans lequel le maître est un dispositif d'analyse,
dans lequel
lors du lancement du dispositif d'analyse, ce dernier vérifie la présence du dispositif de terrain dans le système de bus (5) à une adresse de bus particulière, et
lors de la réponse du système de bus (5), pour l'identification du dispositif de terrain, demande des informations concernant le fabricant, le type et la balise du dispositif de terrain via le système de bus (5), et
à la suite de l'identification, le système d'analyse compare des données récupérées pendant le processus d'identification aux profils de dispositif de terrain mémorisés dans des tables d'allocation du dispositif d'analyse, et
lors d'une coïncidence, génère une configuration de dispositif sous la forme d'une boucle de mesure (23), comportant une composante d'entrée (11), une composante de fonction (12), et une composante de sortie (13), par l'intermédiaire desquelles le dispositif de terrain est prêt à fonctionner.

13. Système de commande de processus (1) comportant
un maître, et
au moins un esclave,
dans lequel le maître est adapté pour commander l'esclave et pour traiter les données reçues en provenance de l'esclave,
dans lequel l'esclave est adapté pour être connecté au maître via un système de bus (5) et communiquer avec celui-ci,
dans lequel le maître est adapté pour identifier automatiquement l'esclave via le système de bus (5) et, pour générer ensuite automatiquement une configuration de dispositif pour configurer l'esclave conformément à son identification de sorte que l'esclave est prêt à fonctionner dans le système de commande de processus (1),
dans lequel la configuration du dispositif générée automatiquement a la forme d'une boucle de mesure (23) pour un esclave identifié spécifique,
dans lequel la boucle de mesure (23) comporte au moins une composante d'entrée (11), au moins une composante de sortie (13), et au moins une composante de fonction (12),
dans lequel la composition de fonction est au moins une fonction sélectionnée parmi le groupe constitué des fonctions suivantes :
un étalonnage concernant la géométrie de conteneur,
des fonctions de linéarisation,
un temps d'intégration,
une considération de la densité,
une suppression du volume de flux de fuite,
une mesure de différence,
une mesure dans un conteneur pressurisé,
une mesure d'interface continue, et
une mise en moyenne.

14. Système de commande de processus (1) selon la revendication 13, dans lequel le maître est un dispositif d'analyse et l'esclave est un dispositif de terrain.

15. Système de commande de processus (1) selon la revendication 13 ou 14, dans lequel le maître est une unité de commande (4) et l'esclave est un détecteur (14) ou un actionneur (15).

16. Système de commande de processus (1) selon l'une quelconque des revendications 13 à 15, dans lequel le maître comporte des tables d'allocation, qui contiennent un nombre de configurations de dispositifs prédéfinies appropriées pour un certain nombre de dispositifs de terrain.

17. Système de commande de processus (1) selon la revendication 16, dans lequel des tables d'allocation peuvent être ajoutées via un dispositif d'entrée (10).

18. Système de commande de processus (1) selon l'une quelconque des revendications 13 à 17, dans lequel le système de bus (5) est un système de bus de type HART.

19. Système de commande de processus (1) selon l'une quelconque des revendications 13 à 18, dans lequel le système de bus (5) comporte des instructions pour le maître afin de demander la présence d'un esclave dans le système de bus (5).

20. Système de commande de processus (1) selon l'une quelconque des revendications 16 à 19, dans lequel les tables d'allocation peuvent être ajoutées par des profils de dispositif adaptés rechargeables.

21. Système de commande de processus (1) selon l'une quelconque des revendications 16 à 20, dans lequel les tables d'allocation comportent des profils de boucle de mesure fixes pour chaque profil de dispositif.
